# EUROPEAN PATENT APPLICATION

(11) **EP 1 245 157 A1**
(43) Date of publication of application: **02.10.2002**
(21) Application number: 02076172.2
(22) Date of filing: 26.03.2002
(51) Int. Cl.: A23C 19/032

(54) **Method for the preparation of cheese and cheese thus formed**

(30) Priority: 28.03.2001 NL 1017723; 11.05.2001 NL 1018047
(71) Applicant: Campina B.V., 5301 LB Zaltbommel (NL)
(72) Inventor: Bruinenberg, Paul Gerard, 5071 KE Udenhout (NL); Smit, Gerrit, 6715 HM Ede (NL)
(74) Representative: Barendregt, Frank, Drs.

(57) **Abstract**

The invention relates to a method for the preparation of cheese in which, in a manner known *per se*, milk is provided with a starter mixture of acid-producing mesophilic bacterial strains and a starter mixture of thermophilic bacterial strains, which method is characterized in that a bacterial strain which under cheesemaking conditions is an overproducer of 3-methylbutanal is also used. The bacterial strain comprises, in particular, *Lactococcus lactis* subsp. *lactis* (B851) and is used in an amount of 0.025 to 0.35 vol.%, preferably 0.10 vol.%, relative to the volume of cheese milk.

The invention also relates to cheese which is substantially crack-free and substantially free of gamma aminobutyric acid, which is characterized in that it has an increased 3-methylbutanal content. In a cheese such as a Proosdij-type cheese the 3-methylbutanal content is at least 1.5 times as high as that of a traditionally prepared Proosdij-type cheese.

## Description

The invention relates to a method for the preparation of a cheese which is substantially crack-free, in which at least starter is added to a vat with milk for the formation of cheese, where the starter contains mesophilic bacterial strains and/or thermophilic bacterial strains and is substantially free of amino acid decarboxylase positive strains.

Such a method is known from Voedingsmiddelentechnologie 27 (1994) (13) pp. 9-11.

In said article a method is described for the production of crack-free Proosdij cheese (available commercially under the trade name Parrano) using the bacterial strains indicated in the opening paragraph.

The known traditional Dutch cheese varieties, Gouda and Edam, are produced using rennet and a starter mixture of acid-producing mesophilic bacterial strains comprising *Lactococcus lactis* subsp. *lactis* and *Lactococcus lactis* subsp. *cremoris* as acid-producing bacteria and the citrate using strains *Lactococcus lactis* subsp. *lactis* biovar *diacetylactis* and *Leuconostoc mesenteroides* subsp. *cremoris* (BOS).

Proosdij cheese differs from Gouda cheese by the use of an additional starter mixture of thermophilic bacterial strains comprising *Streptococcus thermophilus, Lactobacillus helveticus* and *Lactobacillus acidophilus* (NIZOSTAR APS).

A Proosdij cheese which has been prepared with the aforesaid type of starter shows cracking which is connected with the amino acid decarboxylating action of certain decarboxylase-positive strains and in particular of strains which decarboxylate glutamic acid, i.e. cleave CO2 from it.

Proosdij cheese is a so-called short cheese, i.e. a cheese which, when cut out as a thin cylinder, breaks on bending. The CO2 development during ripening causes the cracking to arise in the short cheese.

In the description given above it has been stated that a Proosdij-type cheese can be prepared with a starter which contains mesophilic bacterial strains and/or thermophilic strains. It has been found that Proosdij type cheese can be prepared with the mixture of mesophilic and thermophilic bacterial strains; production of cheese which is akin to Proosdij cheese in flavour, however, can also be achieved with a starter containing only thermophilic bacterial strains.

The cracking problem is explained in the publication mentioned earlier with regard to Proosdij cheese. The opening paragraph, on the other hand, refers to cheese in general, because apart from Proosdij or Proosdij-type cheese the invention is applicable to other varieties of cheese which are susceptible to cracking as a result of, firstly, their consistency during ripening and, secondly, the CO2 production during ripening.

Apart from Proosdij cheese and Proosdij-type cheese, the invention therefore relates in general to semi-hard to hard cheese varieties such as Parmesan cheese (hard), and Swiss cheeses such as Emmental (semi-hard), Gruyère (semi-hard) and Appenzell (semi-hard).

As described in the aforesaid article, the development of a new starter mixture comprising the thermophilic bacterial strains *Streptococcus thermophilus, Lactobacillus acidophilus* and *Lactobacillus helveticus,* but which is free of glutamic acid decarboxylase-positive strains (S1138), led to the solving of the cracking problem in Proosdij cheese. (S1138 was deposited at the Centraal Bureau voor Schimmelcultures on 23/03/2001 under No. CBS 109387).

In the production of a Proosdij-type cheese, with addition of the aforesaid S1138 instead of Nizostar APS in the appropriate quantities and under appropriate conditions, a CO₂ concentration < 5 mmol/kg of cheese is found after 6 weeks of ripening. At such a low concentration there is no eye formation and cracking in the cheese; eye formation and cracking are not observed even after 26 weeks of ripening.

It has now been found, however, that in this crack-free Proosdij-type cheese and other cheeses as mentioned above, respectively, the total flavour intensity was not as high as in cheese prepared with the original culture containing BOS and APS and cultures comparable therewith, for other cheese varieties.

It is an object of the present invention is to provide a method of the aforesaid type in which a cheese is prepared with a flavour which corresponds to the flavour of the type of cheese under consideration, as this was originally developed, but in which bacterial strains are used which lead to suppression of the cracking discussed above.

With this object the present invention is characterized in that, together with the aforesaid bacterial strains suitable for crack-free cheese, a bacterial strain is also added which under cheesemaking conditions is an overproducer of 3-methylbutanal.

Research has in fact shown that the characteristic flavour of certain types of cheese, including Proosdij cheese, is principally connected with the 3-methylbutanal content, which is higher than in Gouda cheese.

The flavour of the semi-hard to hard cheeses mentioned earlier, such as Parmesan cheese, Emmental, Gruyère and Appenzell, is also partly determined by the presence of 3-methylbutanal, so that the invention also relates to such cheeses and cheeses falling into this category.

In the description Proosdij-type cheese will often be given as an example; the invention is not limited thereto, however, and also extends to other cheeses as discussed above. In particular the wild mesophilic Lactococcus strain *Lactococcus lactis* subsp. *lactis* (B851) is used. (B851 was deposited at the Centraal Bureau voor Schimmelcultures on 23/03/2001 under No. CBS 109386).

The wild mesophilic strain *Lactococcus lactis* subsp. *lactis* (B851) given as an example is an overproducer of 3-methylbutanal; the invention is not limited to application of this strain, however.

Every bacterial strain permitted in foods, or such a genetically manipulated bacterial strain which is an overproducer of 3-methylbutanal, will be applicable under the invention.

This Lactococcus strain is known to produce 3-methylbutanal under cheesemaking conditions; incorporation of this Lactococcus strain in the preparation of Gouda cheese, for example, leads to an unacceptable chocolate-like aftertaste which is not wanted by cheese tasters.

It has surprisingly been found, however, that use of the wild mesophilic Lactococcus strain described above, in combination with the earlier described starter mixture of acid-producing mesophilic bacterial strains (BOS) and the starter mixture of thermophilic bacterial strains (S1138), leads to a cheese such as a Proosdij-type cheese with the appropriate characteristic Proosdij cheese flavour, which is described as sweet, fruity and somewhat pungent.
Of the starter mixture of acid-producing mesophilic bacterial strains (e.g. BOS), 0.30-0.80 vol.%, relative to the volume of milk in the cheesemaking vat, is generally used, preferably 0.60 vol.%.

Of the starter mixture of thermophilic bacterial strains (e.g. S1138), 0.5 to 3.0 vol.% is generally used, preferably 2.0 vol.%.

The quantity of wild mesophilic Lactococcus strain, such as B851, used according to the invention is 0.025-0.35 vol.%, preferably 0.10 vol.%, relative to the volume of milk in the cheesemaking vat.

The invention also relates to cheese which is substantially crack-free, is substantially free of gamma aminobutyric acid (GABA), which is characterized in that it has a 3-methylbutanal content which is increased relative to that of the corresponding traditionally prepared cheese.

When a cheese of the Proosdij type or a cheese of one of the other types in the range semi-hard to hard, and even lower than semi-hard, is prepared using the method according to the present invention, a substantially crack-free cheese with an increased 3-methylbutanal content, and in which in particular the glutamic acid has been left intact because of the lack of any decarboxylation effect, will be obtained by use of a starter which is free of amino acid decarboxylase positive strains.

Surprisingly it has now been found that, in spite of a 3-methylbutanal content which is increased relative to the quantity of 3-methylbutanal that is found in traditionally produced cheese, such an increased 3-methylbutanal content does not lead to the aforesaid unwanted chocolate-like flavour.

The reason for this surprising absence of the chocolate flavour, entirely contrary to expectations, has not been ascertained.

In particular, when the cheese is a Proosdij-type cheese as described above, the 3-methylbutanal content is at least 1.5 times as high as that of traditionally prepared Proosdij-type cheese; contents up to twice as high and higher have been found.

The quantity of 3-methylbutanal formed using the strain B851 is determined as follows. Gouda cheese is made in 200 1 portions of pasteurized milk (10 s, 74°C) in accordance with the standard Gouda cheesemaking procedure (Walstra P., Noomen A. & Geurts, T.J. (1987) Dutch-type varieties. In Cheese: Chemistry, Physics and Microbiology, vol. 2, pp. 39-82, Editor P.F. Fox, Chapman & Hall, London). The traditional Gouda culture BOS was grown anaerobically for 16 hours at 18°C in milk and the culture contained 7 x 10⁸ cfu/ml after incubation. Gouda cheese is made with 0.6% (v/v) BOS added to the cheese milk (4.2 x 10⁶ cfu/ml of cheese milk) as the acidifying culture. In order to determine the level of 3-methylbutanal produced by *Lactococcus lactis* subsp. *lactis* B851, strain B851 is grown anaerobically in milk for 16 hours at 30 °C. After incubation the cell count of strain B851 is then 5 x 10⁸ cfu/ml.

In cheesemaking the aforesaid culture of strain B851 is added at a level of 0.1% (v/v) to the cheese milk directly after addition of BOS, i.e. the number of cells per ml of cheese milk is 5 x 10⁵ cfu/ml. After production of the Gouda cheese the number of cells of strain B851 is at least 5 x 10⁶ cfu/gram of cheese. The 3-methylbutanal content in cheese is determined by headspace gas chromatography as described by E.H.E. Ayad, Verheul A., Engels W.J.M., Wouters, J.T.M. and G. Smit (2001) Journal of Applied Microbiology, 90, pp. 59-67. By this method, addition of strain B851 to the cheese milk at a level of 0.1% (v/v) thus produces a quantity of 3-methylbutanal amounting to 1.7 mg/kg of cheese, after 6 weeks of ripening, in the cheese produced. This quantity of 3-methylbutanal is also needed to give the positive flavour effect when used in combination with culture S1138 in Proosdij-type cheese.

If another perhaps genetically manipulated bacterial strain which is an overproducer of 3-methylbutanal is used instead of B851, under the conditions outlined above and used at the same concentrations this should produce at least 1.0 mg of 3-methylbutanal/kg of cheese after 6 weeks of ripening, and preferably 1.3-1.7 mg/kg, in order to achieve the flavour effect intended according to the invention.

The invention will now be discussed with reference to a few examples.

A Proosdij-type cheese was prepared; in the method employed for this purpose, strains to be used are preferably precultured in milk:
BOS was precultured for 16 hours at 18°C in milk.
   (7 x 10⁸ cfu/ml).
S1138 or APS was precultured for 40 hours at 37°C in milk.
   (10⁶ cfu/ml Streptococci, 10⁸ cfu/ml Lactobacilli).
B851 was precultured for 16 hours at 30°C in milk.
   (5 x 10⁸ cfu/ml).

In a series of 6 trials a level of 0.6 vol.% of BOS culture was combined either with 2.0 vol.% of NIZOSTAR APS culture or with 2.0 vol.% of S1138; all percentages are relative to the volume of milk used.

The quantities of B851 used varied between 0.025, 0.10 and 0.25 vol.%.

The cheese was made from milk which was pasteurized for 10 seconds at 74°C and which was standardized to a fat content in accordance with the protocol for Gouda 48+ cheese. The level of rennet added was 15 g/100 l of cheese milk (CSK calf rennet standard).

The cheese in trial a was made with 0.6 vol.% of BOS starter and 2.0 vol.% of NIZOSTAR APS starter as the control which corresponded to traditionally prepared Proosdij cheese.

Trials b, c and d were trials in which traditional Proosdij cheese was made with increasing quantities of B851 in order to be able to monitor flavour development.

Trial e was prepared with 0.60 vol.% of BOS starter and 2.0 vol.% of S1138 in order to provide a cheese in which cracking was eliminated.

Trial f was a trial in which 0.10 vol.% of B851 was also present in addition to 0.60% of BOS starter and 2.0 vol.% of S1138.

The cheese produced was ripened for 3 months at 13°C and an analysis was performed at different times. The levels of starter mixtures used in the various trials are indicated in Table No. 1 below.

**Table 1.**

| Starter cultures used for cheesemaking. | | | | | | |
|---|---|---|---|---|---|---|
| Strain | Trials | | | | | |
| | a | b | c | d | e | f |
| B851 | - | 0.025* | 0.10 | 0.25 | - | 0.10 |
| BOS | 0.60 | 0.60 | 0.60 | 0.60 | 0.60 | 0.60 |
| APS | 2.0 | 2.0 | 2.0 | 2.0 | - | - |
| S1138 | - | - | - | - | 2.0 | 2.0 |

| | | | | | | |
|---|---|---|---|---|---|---|
| * Vol.% of starter preculture added to the cheese vat | | | | | | |

The trials were carried out on a scale of 2000 litres. The quantities of starter indicated and the B851 strain were added to the cheese vats under the usual cheesemaking conditions.

Acid production during cheesemaking was adequate in all the cheeses. After about 6 hours all the cheeses reached a pH of 5.5, which is normal for Proosdij cheese preparation.

### Analysis of the cheese

Compositional analyses for fat, salt, pH and moisture after brining (with an age of 4 days for cheese made on a large scale) were performed in accordance with the IDF standards of 1979, 1982, 1989 and 1997 of the International Dairy Federation, Belgium.

Proteolysis, total nitrogen (TN), soluble nitrogen (SN) and amino acid nitrogen (AN) were performed using Noomen's method [(1977). Noord-Hollandse meshanger cheese: a model for research on cheese ripening. The ripening of cheese. Netherlands Milk and Dairy Journal 31, 75-102].

The free amino acids were analysed on a 4151 Alpha Plus amino acid analyser (Pharmacia LKB, Uppsala, Sweden) directly in the soluble nitrogen fractions of the cheese suspension, as previously prepared and described in: [Engels, W.J.M. and Visser, S., 1994: Isolation and comparative characterization of components that contribute to the flavour of different types of cheese. Netherlands Milk and Dairy Journal 48, 127-140].

Cheeses were organoleptically assessed by experienced cheese tasters after 6 weeks and 3 months of ripening. The total odour and flavour score was judged on a scale from 3 (poor) to 8 (very good). The intensity of the Proosdij aroma (also indicated as thermophilic flavour) and presence of cracks were also assessed. The scale ran from 0 (absent) to 4 (very strong).

Volatile constituents in cheeses of 6 weeks and 3 months were identified and quantitatively determined using head space gas chromatography (HS-GC).

The data concerning the composition of the cheeses in the trials described above are shown in Table 2.

The chemical composition of this cheese was within the norm for the cheese produced.
The viability of B851 remained high during ripening to 6 weeks after the beginning and then decreased after 3 months of ripening. These results indicated that the wild strains used were stable during ripening. There was a direct proportional relationship between the quantity of B851 which was added to the cheese milk and the level of 3-methylbutanal which was measured in the cheese.

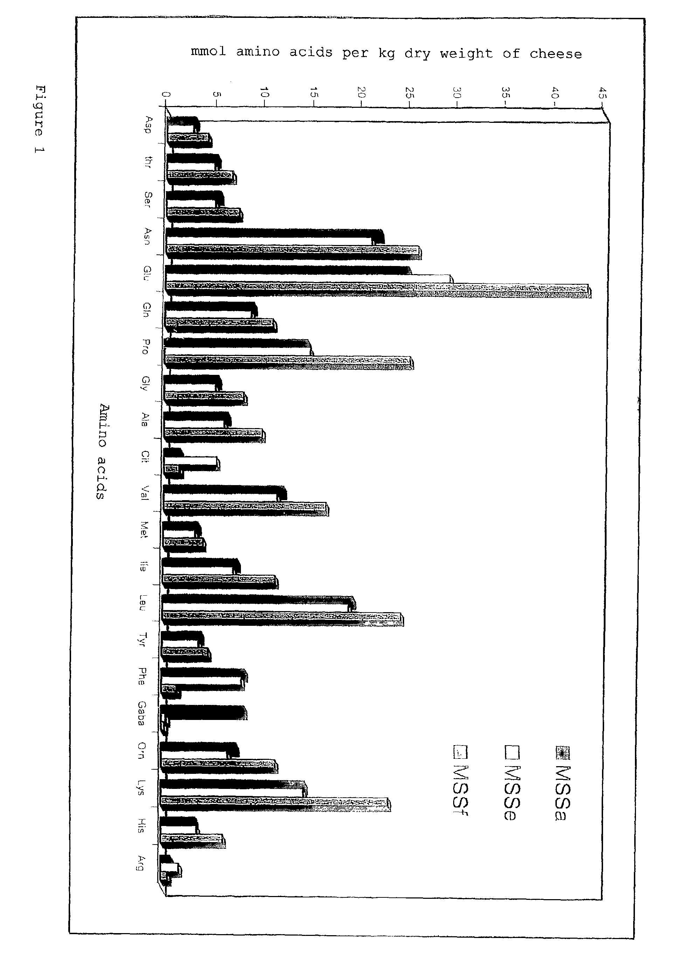

After 6 weeks and 3 months of ripening of the cheese, proteolysis was determined by chemical analysis of the nitrogen content of the soluble nitrogen fraction (SN) and the amino acid nitrogen fraction (AN), Table 2. Proteolysis increased in the cheeses during the ripening process. The AN values were higher in cheeses that contained an additional strain B851, which is protease-positive, than in cheeses that did not contain this additional strain. This effect was clearly visible especially at 6 weeks. The presence of an extra protease-positive strain stimulated proteolysis. Analysis of the free amino acids and in particular GABA confirmed that GABA was only formed in significant amounts in cheese which was prepared with a starter in which NIZOSTAR APS was also present (MSSa); Figure 1 (MSSa, MSSe, MSSf are trials a, e, f, respectively).

Addition of the proteolytic strain B851 leads to an overall increase in amino acid levels, which appears to be positive for subsequent flavour development reactions.

From Figure 1 it can be clearly seen that the amount of GABA formed in trials e and f is low in comparison with the amount of GABA which is formed in standard Proosdij cheese (trial a). This points to the lack of glutamic acid decarboxylase positive strains in the starter; GABA arises when glutamic acid is decarboxylated. Glutamic acid is also increased in trials e) and f) as a result of decreased breakdown by the decarboxylating enzyme (Fig. 1).

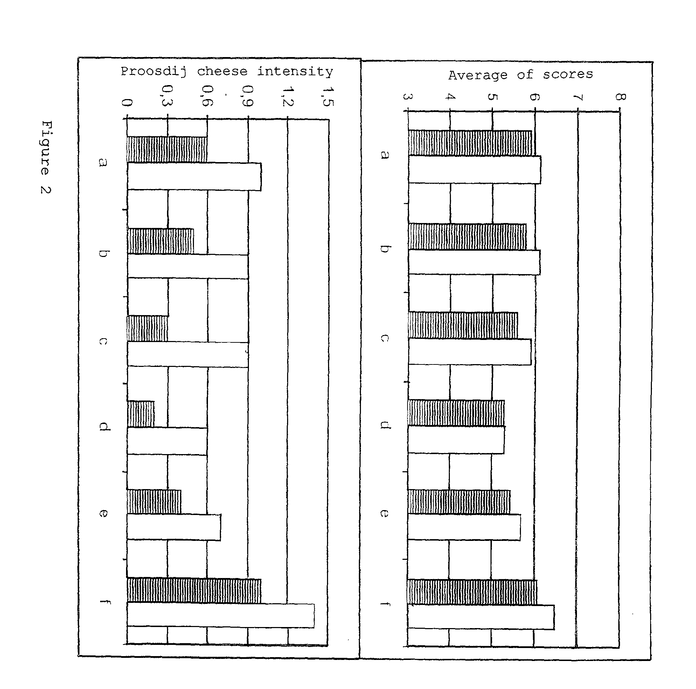

The results of flavour investigations on cheeses a to f inclusive, as described above, are shown in Figure 2.

Cheese a is once again the Proosdij cheese manufactured in a traditional way, while b, c and d contain 0.025, 0.10 and 0.25 vol.% of B851, respectively. E is the Proosdij cheese in which APS has been replaced by S1138 in order to prevent cracks; f is a cheese according to the invention in which 0.10 vol.% of B851 is present.

In Figure 2 the top bar chart shows the average of the scores for odour and flavour; it can be seen that the average score gradually decreases as one passes from a (traditional Proosdij cheese) to d, the Proosdij-type cheese with the highest amount of B851; in e (with S1138) the score increases again, and in f, the cheese according to the invention with B851, the score is equivalent (6 weeks) or even better (3 months) than that of traditionally manufactured Proosdij cheese. In the diagrams the shaded part is always the score after 6 weeks and the non-shaded part the score after 3 months of ripening. The scores after 3 months are important because this is the average age of consumption.

The typical Proosdij flavour intensity is shown in the 2^{nd} diagram of Figure 2, in which it can be seen that the Proosdij intensity decreases from a to d but increases again to some extent in e (Proosdij with S1138), while in f (according to the invention) the Proosdij flavour intensity is higher than in the traditionally prepared Proosdij cheese. Cheese e is not as good as cheese a either in total odour/flavour or in Proosdij intensity, whereas cheese f according to the invention scores better than traditionally prepared Proosdij cheese (a).

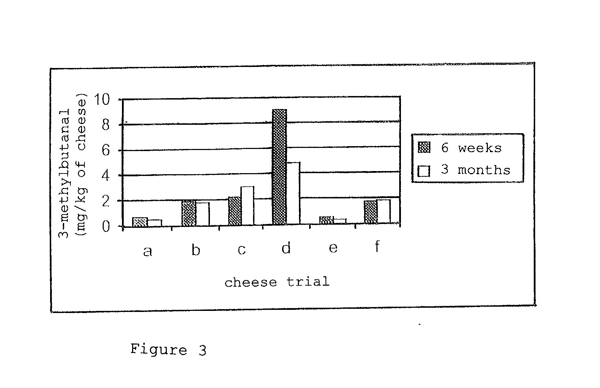

In Figure 3 the amounts of 3-methylbutanal are given in bar chart form for the cheeses from the trial, and it can be clearly seen that a decrease in the amount of 3-methylbutanal is observed in cheese e (Proosdij cheese with S1138 instead of APS), whereas in b, c and d (Proosdij cheese with addition of B851) the amount of 3-methylbutanal formed gradually increases strongly depending on the amount of B851 added to the cheese milk.
In trial f, according to the invention with 0.1% of B851, an increased 3-methylbutanal content is observed but it is lower than the 3-methylbutanal content which is observed in trial c. The levels of B851 in trials c and f are equal; the score as shown in Figure 2, as well as the Proosdij cheese intensity in the cheese according to the invention (f), is better than that of cheese in trials c and a.

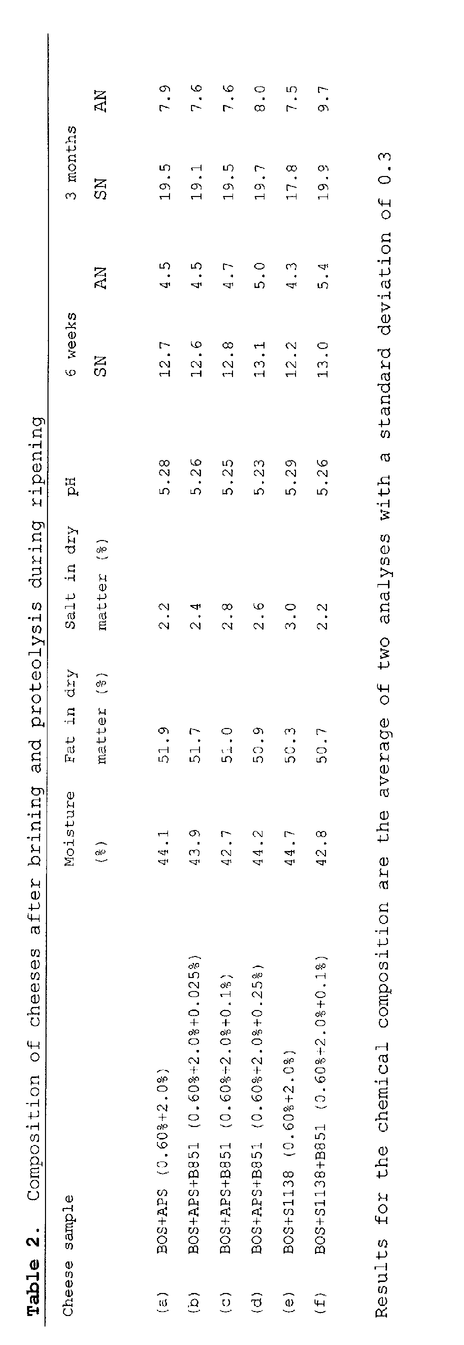

## Claims

1. Method for the preparation of cheese which is substantially crack-free, in which at least starter is added to a vat with milk for the formation of cheese, where the starter contains mesophilic bacterial strains and/or thermophilic bacterial strains and is substantially free of amino acid decarboxylase positive strains, **characterized in that** a bacterial strain which under cheesemaking conditions is an overproducer of 3-methylbutanal is also added.

2. Method according to claim 1, **characterized in that** the bacterial strain comprises a wild mesophilic strain *Lactococcus lactis* subsp. *lactis* (B851).

3. Method according to claim 1-2, **characterized in that** in the method 0.025-0.35 vol.% of B851 is used, relative to the volume of milk in the cheesemaking vat.

4. Method according to claim 3, **characterized in that** 0.10 vol.% of B851 is used.

5. Cheese which is substantially crack-free and substantially free of gamma aminobutyric acid, **characterized in that** it has a 3-methylbutanal content which is increased relative to that of corresponding traditionally prepared cheese.

6. Cheese, in particular a Proosdij type cheese according to claim 5, **characterized in that** the 3-methylbutanal content is at least 1.5 times as high as that of traditionally prepared Proosdij cheese.
